# FASCICULE DE BREVET EUROPEEN

(11) **EP 0 272 974 B1**
(45) Date de publication et mention de la délivrance du brevet: **15.09.1993**
(21) Numéro de dépôt: 87402802.0
(22) Date de dépôt: 10.12.1987
(51) Int. Cl.: B01J 19/26, B01F 5/06, C05B 7/00

(54) **Procédé de neutralisation d'acides par l'ammoniac**
Verfahren zur Neutralisation von Saüren mittels Ammoniak
Process of neutralisation of acids by ammoniac

(30) Priorité: 18.12.1986 GR 862922
(43) Date de publication de la demande: 29.06.1988
(73) Titulaire: GRANDE PAROISSE S.A., F-92800 Puteaux (FR)
(72) Inventeur: Belis, Dimitrios, GR-546 35 Thessalonique (GR); Chinal, Pierre, F-76160 Martin du Vivier (FR); Priat, Jean François, F-76420 Bihorel (FR)
(74) Mandataire: Haicour, Philippe

(56) Documents cités:
- EP-A- 0 083 122
- EP-A- 0 087 798
- EP-A- 0 145 134
- CH-A- 326 944
- CH-A- 564 966
- DE-A- 2 048 662
- GB-A- 588 884
- GB-A- 2 026 999
- GB-A- 2 077 711
- GB-A- 2 142 835
- US-A- 3 874 643
- US-A- 4 358 433
- US-A- 4 447 401

## Description

La présente invention concerne un Procédé de neutralisation par l'ammoniac d'acides et mélanges d'acides ou de bouillies acides utilisant un réacteur tubulaire permettant d'améliorer le rendement et la flexibilité.

Les réacteurs tubulaires sont bien connus. Ils consistent en une simple longueur de tube de relativement faible diamètre sans garnissage interne. Les réacteurs tubulaires généralement utilisés sont horizontaux ou faiblement inclinés (au plus 45°) par rapport à l'horizontale. Ils ont en général un diamètre compris entre 200 et 10 mm pour une longueur de 1,50 m à 10 m. Le rapport longueur/diamètre n'est en général pas inférieur à 50.

Ils sont utilisés pour la neutralisation par l'ammoniac d'acides, de mélanges d'acides ou de bouillies acide, telles que les bouillies obtenue par attaque d'un phosphate naturel par un excès d'acide sulphurique, nitrique, phosphorique ou leurs mélanges. Ils sont le plus souvent utilisés pour la fabrication de phosphates ou polyphosphates d'ammonium.

Pour la bonne marche des réacteurs tubulaires il est nécessaire d'avoir un mélange des réactifs aussi parfait que possible. En effet dans le cas contraire on obtient à la sortie du réacteur tubulaire une phase dense liquide constituée essentiellement des composés acides plus ou moins neutralisés qui s'écoule du tube et une phase gazeuse essentiellement constituée d'ammoniac et de vapeur d'eau. Dans ces conditions les pertes en ammoniac sont importantes. Lorsque le mélange se fait bien on n'obtient plus de phase dense. Il se forme un nuage de gouttelettes de solutions plus ou moins concentrées, voire de particules solides que l'on peut séparer de la vapeur d'eau. D'autre part pour la bonne marche de l'installation il est nécessaire que le réacteur puisse traiter des quantités de réactifs aussi variables que possibles.

Différents systèmes ont été proposés pour améliorer le mélange des produits en tête de tube. On a par exemple proposé d'introduire l'un des réactifs à l'aide d'un dispositif du type diffuseur (FR-A-2172826). Mais ce dispositif est sujet au bouchage. On a également proposé un dispositif appelé "jet reactor" dans lequel l'acide et l'ammoniac sont introduits à l'aide de deux tubes concentriques et sont mélangés à l'aide d'un dispositif hélicoïdal suivi d'un convergent (phosphorus and potassium, n° 45 (1970) p.18-19). Mais dans ce cas également il y a bouchage au niveau du dispositif hélicoïdal.

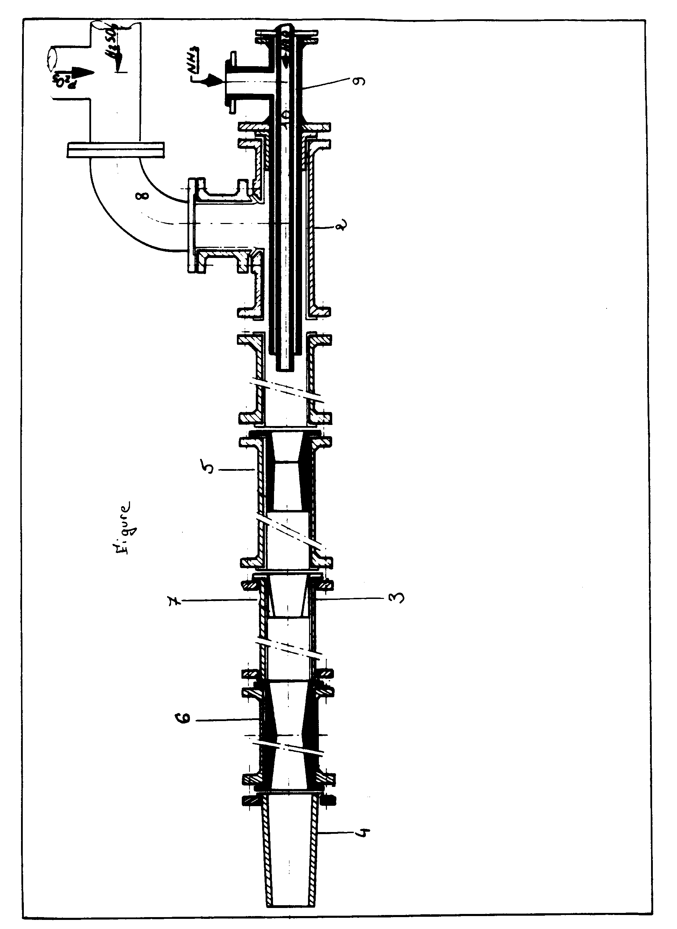

Des réacteurs tubulaires équipés d'un ou plusieurs convergents-divergents sont utilisés dans de nombreux domaines, et notamment :
- pour la polymérisation de lactame (DE-A-2.048.662, Fig. 2)
- pour le mélange d'au moins deux fluides (gaz et/ou liquides et/ou matières pulvérulentes) (CH-A-564.966) US-A-3.874.643, GB-A-2.142.835.

On peut également citer EP-A-145.134 qui décrit un système de mélange en ligne constitué d'éléments tubulaires à l'intérieur desquels est placée une vis hélicoïdale à double pas et dont l'orifice de sortie est un convergent.

La présente invention concerne un Procédé de neutralisation par l'ammoniac d'acides et mélanges d'acides ou de bouillies acides utilisant un réacteur tubulaire comportant une zone d'injection, une zone de réaction et une buse de sortie des produits finis, caractérisé en ce que ledit réacteur comprend un premier convergent-divergent situé dans la zone de réaction juste après la zone d'injection des réactifs et un convergent-divergent à la sortie de la zone de réaction juste avant la buse de sortie des produits finis.

Selon la longueur du tube et le type de réactifs utilisés on dispose éventuellement entre les deux convergents-divergents définis ci-dessus un ou au plus trois convergents-divergents ou convergents.

On a en effet trouvé que l'emploi de ces convergents-divergents ou convergents permet d'améliorer le mélange des réactifs sans qu'il y ait des risques de bouchage.

La flexibilité d'utilisation est fortement améliorée.

La description donnée ci-dessous ainsi que le figure annexée permettront de mieux comprendre l'invention. Le réacteur tubulaire (1) comporte une zone d'introduction des réactifs (2) une zone de réaction (3) et une buse de sortie des produits (4).

Selon le mode de réalisation représenté sur la figure un convergent-divergent (5) est monté à l'entrée de la zone de réaction (3). Selon l'invention ce convergent-divergent pourrait être remplacé par un convergent mais le convergent-divergent donne de meilleurs résultats. Un autre convergent-divergent (6) est placé à la sortie de la zone de réaction (3). Ce convergent divergent peut également être remplacé par un convergent. L'amélioration apportée par l'emploi d'un convergent-divergent à la place d'un convergent à la sortie de la zone de réaaction (3) est moins nette que dans le cas d'un convergent-divergent à l'entrée de la zone de réaction (3). Selon le mode de réalisation représente un convergent (7) est monté entre les convergents-divergents (5) et (6). Ce convergent (7) pourrait être remplacé par un convergent-divergent. Par ailleurs il faut noter que selon l'invention il peut ne pas y avoir de convergent (7) ou de convergent-divergent. Par contre selon la longuer du réacteur tubulaire ou le réactif utilisé il peut y avoir, entre les convergents-divergents (5) et (6) d'entrée et de sortie de la zone de réaction (3), jusqu'à 3 convergents-divergents ou convergents intermédiaire. Dans ces conditions le mélange réactionnel sortant de la zone d'introduction (2) est accéléré par le convergent-divergent (5) ce qui améliore le mélange au commencement de la réaction. Le convergent-divergent (6) permet d'effecter un dernier mélange avant la sortie du produit fini.

La zone de réaction (3) selon l'invention peut être associé à toute zone d'introduction des réactifs (2). Selon le mode de réalisation représenté sur la figure annexée l'acide ou le mélange d'acide est introduit dans la zone (2) par une conduite d'alimentation (8) qui s'ouvre perpendiculairement dans le réacteur tubulaire (1). Il pourrait y avoir plusieurs conduites d'alimentation en acide s'ouvrant perpendiculairement ou tangentiellement au réacteur tubulaire (1). Selon le mode de réalisation représenté sur la figure annexée deux conduites concentriques axiales (9) et (10) sont prévues pour l'alimentation en ammoniac liquide et en eau respectivement, la conduite d'alimentation en eau (10) étant intérieure à la conduite d'alimentation en ammoniac. La conduite d'alimentation eau (10) pourrait être supprimée il n'y aurait donc plus qu'une conduite d'alimentation en ammoniac liquide ou gazeux.

La buse de sortie des produits (4) peut être une buse tronconique comme représenté sur la figure. Elle peut également être dissymétrique ou coudée pour orienter le jet de produit fini.

### EXEMPLE

Dans un réacteur tubulaire analogue à celui de la figure annexée on fabrique un mélange de sulfate d'ammonium par réaction d'acide phosphorique à 26%, acide sulfurique à 95% et ammonium.
a) lorsque l'intérieur de la zone de réaction est nu on peut traiter de :
   - 11 t/h à 5,5 t/h d'ammoniac
   - 26 t/h à 13 t/h d'acide sulfurique
   - 11 t/h à 5,5 d'acide phosphorique
   - la flexibilité est d'environ 1/2
b) lorsque l'intérieur de la zone de réaction contient des convergents-divergents et un convergent comme représenté sur la figure annexée, on peut traiter de :
   - 2 t/h à 11 t/h d'ammoniac
   - 4,5 t/h à 26 t/h d'acide sulfurique
   - 2 t/h à 11 t/h d'acide phosporique
   - la flexibilité est d'environ 1/6

## Revendications

1. Procédé de neutralisation par l'ammoniac d'acides et mélanges d'acides ou de bouillies acides utilisant un réacteur tubulaire comportant une zone d'injection, une zone de réaction et une buse de sortie des produits finis, caractérisé en ce que ledit réacteur comprend un premier convergent-divergent situé dans la zone de réaction juste après la zone d'injection des réactifs et un convergent-divergent à la sortie de la zone de réaction juste avant la buse de sortie des produits finis.

2. Procédé selon la revendication 1 caractérisé par le fait que, entre les convergents-divergents situés à l'entrée et à la sortie de la zone de réaction, un à trois convergents-divergents ou convergents sont disposés.

## Claims

1. Process for the neutralisation of acids and mixtures of acids or acid slurries with ammonia, using a tubular reactor containing an injection zone, a reaction zone and an exit nozzle for the finished products, characterised in that the said reactor comprises a first convergent-divergent nozzle located in the reaction zone immediately after the zone for injection of the reactants, and a convergent-divergent nozzle at the exit of the reaction zone immediately before the exit nozzle for the finished products.

2. Process according to Claim 1, characterised in that one to three convergent-divergent nozzles or convergent nozzles are arranged between the convergent-divergent nozzles located at the entrance and at the exit of the reaction zone.

## Patentansprüche

1. Verfahren zur Neutralisation von Säuren oder Säuregemischen oder sauren Schlämmen mittels Amoniak, unter Verwendung eines Rohrreaktors, enthaltend eine Injektionszone, eine Reaktionszone und einen Austrittsstutzen für die Endprodukte, dadurch gekennzeichnet, daß besagter Reaktor einen ersten Diffusor, der in der Reaktionszone gerade hinter der Injektionszone der Ausgangsstoffe und einen Diffusor am Ausgang der Reaktionszone, gerade vor dem Austrittsstutzen für die Endprodukte gelegen ist, enthält.

2. Verfahren nach Anspruch 1, dadurch gekennzeichnet daß zwischen den Diffusoren, die am Eingang und Ausgang der Reaktionszone vorgesehen sind, ein bis drei Diffusoren oder Konvergenten angeordnet sind.
